# EUROPÄISCHE PATENTANMELDUNG

(11) **EP 4 703 182 A1**
(43) Veröffentlichungstag der Anmeldung: **04.03.2026**
(21) Anmeldenummer: 25190862.0
(22) Anmeldetag: 22.07.2025
(51) Int. Cl.: B60L 5/42, B60L 53/16, H01R 9/22, H01R 12/71, H01R 13/24

(54) **KONTAKTELEMENT, STROMABNEHMER, KONTAKTSTATION, KONTAKTLADESYSTEM UND ANLAGE**

(30) Priorität: 29.08.2024 DE 102024124775
(71) Anmelder: Conductix-Wampfler GmbH, 79576 Weil am Rhein (DE)
(72) Erfinder: Hagin, Moritz, 79576 Weil am Rhein (DE); Lang, Dietmar, 79418 Schliengen (DE)
(74) Vertreter: Charrier Rapp & Liebau

(57) **Zusammenfassung**

Die Erfindung betrifft ein Kontaktelement (30a-c; 130) zur Kontaktierung eines Schleifkontakts (16a-c), mit einem Befestigungsabschnitt (31a-c) und einem mit diesem verbundenen, sich in eine Längsrichtung (L) erstreckenden Kontaktabschnitt (36a-c), wobei der Schleifkontakt (16a-c) und das Kontaktelement (30a-c; 130) zueinander beweglich sind. Die Erfindung löst die Aufgabe, ein verbesserte, sichere, zuverlässige und dennoch verschleißarme konduktive Übertragung elektrischer Energie und/oder Daten zu und/oder von einem beweglichen elektrischen Verbraucher zu ermöglichen, dadurch, dass der Kontaktabschnitt (36a-c) mindestens einen elektrisch leitenden Kontakt (39a-e; 139a-e) mit einer Kontaktfläche (42a-e; 142a-e) zur elektrisch leitenden Kontaktierung des Schleifkontakts (16a-c) aufweist. Weiter betrifft die Erfindung einen Stromabnehmer (20) zur konduktiven Übertragung elektrischer Energie und/oder Daten zu oder von einer Kontaktstation (10) mit mindestens einem solchen Kontaktelement (30a-c; 130), eine solche Kontaktstation (10) mit einem oder mehreren Schleifkontakten (16a-c) zu Kontaktierung eines oder mehrere Kontaktelemente (30a-c; 130) des Stromabnehmers (20), ein Kontaktladesystem (1) zwischen mindestens einer Kontaktstation (10) und mindestens einem Stromabnehmer (20), sowie eine Anlage mit mindestens einem gegenüber einem Rahmenteil der Anlage verfahrbaren elektrischen Verbraucher mit mindestens einem solchen Kontaktladesystem (1).

## Beschreibung

Die Erfindung betrifft ein Kontaktelement nach dem Oberbegriff des Anspruchs 1, einen Stromabnehmer nach dem Oberbegriff des Anspruchs 17, eine Kontaktstation nach dem Oberbegriff des Anspruchs 19, ein Kontaktladesystem nach dem Oberbegriff des Anspruchs 21 sowie eine Anlage nach dem Oberbegriff des Anspruchs 22.

Die DE 10 2019 131 365 A1 betrifft ein Lager mit mindestens einer Regaleinrichtung, in die mit einem Flurförderzeug Lasten ein- und aus der Lasten ausgelagert werden können, und mit einem entlang der Regaleinrichtung verlaufenden Gang, wobei ein induktives Lademittel für das in dem Gang befindliche Flurförderzeug vorgesehen ist, wobei das induktive Lademittel an seiner zu der Regaleinrichtung weisenden Seite einen ersten Abstand und an seiner von der Regaleinrichtung fortweisenden Seite einen zweiten Abstand zu der Regaleinrichtung aufweist, wobei der erste Abstand so bemessen ist, dass das Flurförderzeug bei einem Ein- und Auslagervorgang induktiv geladen werden kann und der zweite Abstand so bemessen ist, dass das Flurförderzeug auch bei einem Hebe- und Senkvorgang induktiv geladen werden kann. Die induktive Lagerung bedeutet einen erheblichen Aufwand, so muss der Abstand zwischen den Übertragungsspulen immer möglichst gering gehalten oder die Übertragungsleistung erhöht werden, um schnell und sicher Laden zu können. Auch können aufgrund der relativ hohen magnetischen Felder gesundheitliche Probleme bei Bedienpersonen auftreten, und elektronische Geräte wie Mobiltelefone oder kabellos mit einem Datennetz verbundenen Bedieneinrichtung können nachteilig beeinflusst werden.

Die US 2023/0278797 A1 offenbart eine Blockspeicherranordnung und ein Verfahren zum Betreiben derselben. Die Blockspeicheranordnung umfasst mehrere Containerstapelfächer, ein unterhalb dieser angeordnetes Speicherfach, mindestens ein darin verfahrbares Speicherfahrzeug, mit dem Container von unten in ein Containerstapelfach einlagerbar und/oder von unten aus dem Containerstapelfach entnehmbar sind, das über ein elektrisches Antriebsaggregat und eine elektrisch aufladbare Batterie verfügt, und mindestens eine Übergabestation, in der eine elektrische Ladeeinrichtung für die Batterie angeordnet ist.

Die US 5 998 963 A betrifft ein Servicecenter und ein Verfahren, welche die Verwendung eines batteriebetriebenen Elektrofahrzeugs fördern sollen. Sie ermöglichen den einfachen und schnellen Austausch einer entladenen Batterie im Elektrofahrzeug und deren anschließende Wiederaufladung für die Verwendung in einem anderen Elektrofahrzeug. Das Servicecenter und das Verfahren verwenden eine Vielzahl universell anpassbarer Batterien, die in den meisten batteriebetriebenen Elektrofahrzeugen verwendet werden können. Die Batterien sind so konzipiert, dass sie in einen Batterieaufnahmeraum an der Unterseite eines Elektrofahrzeugs gehoben oder aus diesem abgesenkt werden können. Während der Nutzung werden die Elektrofahrzeuge in ein Servicecenter gefahren. Die Batterien werden aus dem Fahrzeug ausgebaut und anschließend bequem zu einer Ladeeinheit im nahegelegenen Ladezentrum transportiert. Anschließend wird eine zweite, aufgeladene Batterie aus der Ladeeinheit entnommen und zum Elektrofahrzeug transportiert, darin eingebaut und verriegelt. Dadurch lässt sich die schwere Elektrobatterie leicht handhaben und die lange Wartezeit zum Aufladen der Batterie entfällt, sodass mit dem Elektrofahrzeug unbegrenzte Entfernungen zurückgelegt werden können.

Die US 2019/0148891 A1 betrifft verschiedene Konfigurationen aktiver Abdeckplatten mit Stiften, die für den Kontakt mit seitlichen Schraubklemmen elektrischer Steckdosen konfiguriert sind.

Die DE 10 2008 042 050 A1 offenbart einen elektrischen Leistungs-Steckkontakt zur Spannungs- und/oder Stromversorgung einer elektrischen Komponente in einem Kraftfahrzeug, mit einer Leiterkontaktfläche zum Kontaktieren eines elektrischen Kabels und mit Federmitteln zum Erzeugen einer senkrecht zu einer Einsteckrichtung orientierten Anpresskraft und mit einer Verriegelungsfeder zum Verhindern eines Herausziehens des Leistungs-Steckkontaktes entgegen der Einsteckrichtung. Dabei ist vorgesehen, dass ein Kontaktbereich zur unmittelbaren Kontaktierung einer Leiterbahn einer Leiterplatte vorgesehen ist. Ferner betrifft die Erfindung eine Leiterplattenanordnung.

Die US 2004/0121629 A1 offenbart einen elektronischen Kartenverbinder umfassend ein Isoliergehäuse, eine Vielzahl von leitfähigen Anschlüssen und eine Vielzahl von Anschlusskanälen, die das Isoliergehäuse von oben bis unten durchdringen. Die leitfähigen Anschlüsse können jeweils in entsprechenden Anschlusskanälen aufgenommen werden. Zusätzlich zu einem Basisabschnitt umfasst jeder leitfähige Anschluss eine Lötfahne und einen Kontaktabschnitt, und sie sind jeweils an den gegenüberliegenden Enden des leitfähigen Anschlusses angeordnet. An der Unterseite des Isoliergehäuses sind Aufnahmemulden zur Aufnahme der Lötfahne ausgebildet. An den Innenwänden der Aufnahmemulden sind Störabschnitte ausgebildet, die zur Aufnahme der Lötfahnen dienen. In der Mitte jeder Aufnahmemulde ist eine erhöhte Plattform ausgebildet, gegen die die Lötfahne gedrückt wird. Zwischen zwei benachbarten Aufnahmeausmulden ist ein etwa U-förmiger Schlitz ausgebildet, um die Haltekraft des Interferenzabschnitts an der Lötfahne zu erhöhen.

Der Erfindung liegt deshalb die Aufgabe zugrunde, ein verbesserte, sichere, zuverlässige und dennoch verschleißarme konduktive Übertragung elektrischer Energie und/oder Daten zu und/oder von einem beweglichen elektrischen Verbraucher zu ermöglichen.

Die Erfindung löst diese Aufgabe mit einem Kontaktelement mit den Merkmalen des Anspruchs 1, einen Stromabnehmer mit den Merkmalen des Anspruchs 17, eine Kontaktstation mit den Merkmalen des Anspruchs 19, ein Kontaktladesystem mit den Merkmalen des Anspruchs 21 sowie eine Anlage, insbesondere Hochregallager mit den Merkmalen des Anspruchs 22.

Ein eingangs genanntes Kontaktelement ist erfindungsgemäß dadurch gekennzeichnet, dass der Kontaktabschnitt mindestens einen elektrisch leitenden Kontakt mit einer Kontaktfläche zur elektrisch leitenden Kontaktierung des Schleifkontakts aufweist.

Bevorzugt kann der Kontaktabschnitt elektrisch leitend sein. Weiter kann der Kontaktabschnitt vorteilhaft konvex gekrümmt sein. Hierdurch kann sichergestellt werden, dass zumindest einer der Kontakte eine gute kontaktierende elektrische Verbindung zu dem Schleifkontakt herstellen kann.

Weiter kann der Kontaktabschnitt vorteilhaft zumindest teilweise von der Kontaktfläche wegweisende trogförmige Seitenwandungen aufweisen. Durch die trogförmige Ausgestaltung kann die Stabilität des Kontaktabschnitts verbesserte werden, was insbesondere im Hinblick auf die gewünschte Vielzahl von Kontaktierungszyklen hilfreich ist. Bevorzugt können die trogförmigen Seitenwandungen im wesentlichen in Längsrichtung verlaufen.

Bevorzugt kann der Kontaktabschnitt ein freies Ende aufweisen. Hierdurch kann eine Bewegbarkeit des Kontaktabschnitts vor allem in Höhenrichtung verbessert werden. Weiter kann sich der Kontaktabschnitt bevorzugt zu dem freien Ende hin verjüngen.

Bevorzugt kann der auch Befestigungsabschnitt in die Längsrichtung verlaufen. Weiter kann der Befestigungsabschnitt vorteilhaft in einer quer zur Längsrichtung verlaufenden Querrichtung verlaufende Positionierrücksprünge und/oder Positioniervorsprünge aufweisen. Hierdurch kann eine Positionierung und Fixierung des Kontaktelements im Stromabnehmer erleichtert werden, insbesondere in Längsrichtung und einer hierzu senkrecht verlaufenden Querrichtung, welche bevorzugt auch senkrecht zu Höhenrichtung verläuft, welche wiederum bevorzugt senkrecht zur Längsrichtung verläuft.

Bevorzugt kann sich an den Befestigungsabschnitt in Längsrichtung ein stark, bevorzugt um mindestens 150°, besonders bevorzugt um mindestens 170° gekrümmter Abschnitt anschließen. Bevorzugt kann dieser gekrümmte Abschnitt U-Förmig ausgebildet sein.

Weiter kann vorteilhaft der Kontaktabschnitt gegenüber dem Befestigungsabschnitt in einer Ruhestellung gelagert sein und bei Auslenkung des Kontaktabschnitts aus der Ruhestellung ein Rückstellelement eine, insbesondere federelastische, Rückstellkraft in Richtung der Ruhestellung auf den Kontaktabschnitt ausübt.

Bei der oben eben beschriebenen Ausgestaltung des stark gekrümmte Abschnitts, insbesondere der U-Förmig Ausgestaltung, können der Befestigungsabschnitt und der Kontaktabschnitt vorteilhaft übereinander angeordnet sei, wobei der stark gekrümmte Abschnitt dann gleichwohl als federelastisches Rückstellelement wirkt, welcher im Zusammenspiel mit dem Kontaktabschnitt und dem Befestigungsabschnitt die Rückstellkraft des Kontaktabschnitts zur Ruhestellung und gegenüber dem Befestigungsabschnitt bewirkt. Ggf. kann als Rückstellelement aber auch direkt ein Federelement zwischen dem Befestigungsabschnitt und dem Kontaktabschnitt vorgesehen werden, z.B. eine oder mehrere Spiralfedern oder eine Blattfeder o.ä.

Bevorzugt kann sich in Längsrichtung an den Kontaktabschnitt ein erster Krümmungsabschnitt anschließen. Der erste Krümmungsabschnitt kann dabei vorteilhaft gegenüber dem Kontaktabschnitt in Höhenrichtung gegenläufig gekrümmt sein, so dass sich der erste Krümmungsabschnitt und der Kontaktabschnitt einen in etwa S-förmig gebogenen Abschnitt ausbilden. Weiter kann sich der erste Krümmungsabschnitt bevorzugt zum Kontaktabschnitt hin verjüngen. Bevorzugt kann sich der erste Krümmungsabschnitt in Längsrichtung an den stark gekrümmten Abschnitt anschließen.

Bevorzugt kann die Kontaktfläche des Kontakts kalottenförmig ausgebildet sein, insbesondere in Form einer Kugelkalotte. Hierdurch kann eine besonders gute elektrische Kontaktierung mit einem klar räumlich definierten Kontaktpunkt erreicht. Dies ist auch dann gegeben, wenn der Kontaktabschnitt in Längsrichtung gesehen gegenüber dem Schleifkontakt schräg oder gekippt zu liegen kommt, da auch dann ein klar definierter Kontaktpunkt der Kontaktfläche am Schleifkontakt zu liegen kommt.

Dabei kann Kontakt bevorzugt einen die Kontaktfläche aufweisenden, insbesondere pilzförmigen Kontaktteil aufweisen. Weite kann der Kontakt vorteilhaft einen Befestigungsteil zum Befestigen in einer entsprechend geformten Kontaktaufnahme des Kontaktabschnitts aufweisen. Weiter können am Kontaktabschnitt mehrere in Längsrichtung zueinander versetzte Kontakte befestigt sein, welche bevorzugt identisch ausgebildet sind. Hierdurch kann schon beim Ein- und/oder Ausfahren des Kontaktelements an den Schleifkontakt ein elektrischer Kontakt sichergestellt werden, und auch ein Verkippen des Kontaktelements in der Längsrichtung können hierdurch ausgeglichen werden.

Bevorzugt können die Kontakte dabei dem Verlauf des Kontaktabschnitts in Längsrichtung folgen, insbesondere seiner Krümmung oder Biegung, und/oder in Höhenrichtung zueinander jeweils in einem Winkel zueinander angeordnet sein.

In einer vorteilhaften Ausgestaltung folgen Scheitelpunkte der Kontaktflächen der Krümmung des Kontaktabschnitts und/oder liegen die Scheitelpunkte auf einem Kreisbogen. Hierdurch kann eine gute und punktgenaue Übertragung zwischen den Kontaktflächen und dem Schleifkontakt erreicht und insbesondere die Anlage der Kontaktflächen an dem Schleifkontakt verbessert werden, unabhängig davon, in welcher Stellung sich der Kontaktabschnitt gegenüber dem Schleifkontakt im Betrieb befindet. Vorteilhaft können die Kontakte als Kontaktstifte ausgebildet sein.

Bevorzugt können mehrere oder alle der zueinander versetzten Kontakte miteinander elektrisch und/oder mechanisch zu einem Kontaktstiftelement verbunden sein. Hierdurch kann die Herstellung des Kontaktelements vereinfacht werden, da die Kontakte dann nicht mehr einzeln in den Kontaktabschnitt eingesetzt und befestigt werden müssen, sondern das Kontaktstiftelement auf einmal eingebaut werden kann.

Vorteilhaft kann das Kontaktstiftelement an die Krümmung des Kontaktabschnitts angepasst sein, so dass eine gute elektrische Kontaktierung mit dem Kontaktabschnitt erreicht werden kann.

Bevorzugt können die Kontakte über Verbindungsstege miteinander verbunden sein.

Weiter können vorteilhaft die Verbindungsstege zum Kontaktabschnitt hin weisende Stromübertragungsflächen zur, bevorzugt flächigen, Anlage an den Kontaktabschnitt aufweisen. Hierdurch lässt sich eine hohe Stromübertragung zwischen den Kontakten und dem Kontaktabschnitt bei gleichzeitig kompakter Bauweise erzielen.

Eine fertigungstechnisch günstige Ausführung kann vorsehen, dass das Kontaktstiftelement mit den Kontakten materialeinstückig ausgebildet ist.

Ein eingangs genannter Stromabnehmer zur konduktiven Übertragung elektrischer Energie und/oder Daten zu oder von einer Kontaktstation ist erfindungsgemäß dadurch gekennzeichnet, dass er mindestens ein in den Ansprüchen sowie oben und nachfolgend beschriebenes Kontaktelement aufweist.

Bevorzugt können die Kontaktelemente quer zur Längsrichtung, insbesondere parallel, nebeneinander angeordnet sein. Weiter können bevorzugt die Kontaktelemente schwimmend am Stromabnehmer gelagert sein, insbesondere schwimmend in der Längsrichtung und/oder der Höhenrichtung und/oder einer quer zur Längsrichtung und/oder quer zur Höhenrichtung verlaufenden Querrichtung.

Weiter bevorzugt können die Kontaktelemente an einer Tragplatte des Stromabnehmers angeordnet sein, wobei zwischen den Kontaktelementen Trennstege vorgesehen sein können, insbesondere elektrisch isolierende Trennstege. Vorteilhaft kann die Tragplatte aus in Längsrichtung verlaufenden, in Querrichtung miteinander verbindbaren Einzelteilen, insbesondere Teilstücken, zusammengesetzt sein. Dies erleichtert den Zusammenbau des Stromabnehmers.

Eine eingangs genannte Kontaktstation zur konduktiven Übertragung elektrischer Energie und/oder Daten zu oder von einem Stromabnehmer ist erfindungsgemäß dadurch gekennzeichnet, dass die Kontaktstation einen oder mehrere Schleifkontakte zur Kontaktierung eines oder mehrerer in den Ansprüchen sowie oben und nachfolgend beschriebenen Kontaktelemente des Stromabnehmers aufweist.

Bevorzugt kann die Kontaktstation einen oder mehrere Schleifkontakte zu Kontaktierung eines oder mehrere Kontaktelemente des Stromabnehmers aufweisen. Weiter kann bevorzugt der oder die Schleifkontakte in Längsrichtung einander gegenüberliegende, in Höhenrichtung rampenförmig verlaufende Enden aufweisen. Diese erleichtern das Ein- bzw. Ausfahren der Kontaktelemente, welche erst langsam von der Ruhestellung ausgelenkt werden, bis sie in die gespannte Kontaktstellung gelangen.

Bevorzugt können die Schleifkontakte quer zur Längsrichtung, insbesondere parallel, nebeneinander angeordnet sein. Dabei können mindestens 2, bevorzugt mindestens 3 der nebeneinander angeordneten Schleifkontakte vorteilhaft in Längsrichtung unterschiedlich lang sein. Hierbei können die Enden eines längeren Schleifkontakts vorteilhaft in Längsrichtung beidseits über die Enden eines kürzeren Schleifkontakts hinausragen. Dadurch kann sichergestellt werden, dass ein bestimmter Schleifkontakt beim Einfahren zuerst kontaktiert wird und beim Ausfahren zuletzt den Kontakt löst, um beispielsweise einen sicheren und möglichst langen elektrischen Kontakt zu dem entsprechenden Kontaktelement zu erreichen. Ggf. kann der erste Kontakt mit dem längsten Schleifkontakt auch als Aktivierungssignal verwendet werden, um die nachfolgende Übertragung möglichst rasch einleiten zu können. Ggf. kann auch der kürzeste Schleifkontakt als Signalkontakt verwendet werden, z.B. zum Starten der Übertragung, da beim Einfahren seines Kontaktelements die anderen Schleifkontakte bereits von den zu geordneten Kontaktelementen kontaktiert und eine elektrische Verbindung hergestellt wurde. Entsprechend kann dieser dann auch beim Lösen der Kontaktierung dies signalisieren, so dass die elektrische Übertragung mittels der anderen Schleifkontakte umgehend beendet werden kann. Hierdurch lässt sich auch auf günstige Weise ein Funkenschlag zwischen den Schleifkontakten und den entsprechenden Kontaktelementen verhindern.

Ein eingangs genanntes Kontaktladesystem zur Übertragung elektrischer Energie und/oder Daten ist erfindungsgemäß dadurch gekennzeichnet, dass der oder die Stromabnehmer wie in den Ansprüchen sowie oben und nachfolgend beschrieben ausgebildet und die Kontaktstation oder Kontaktstationen wie in den Ansprüchen sowie oben und nachfolgend beschrieben ausgebildet sind.

Ein eingangs genannte Anlage ist erfindungsgemäß dadurch gekennzeichnet, dass sie ein Kontaktladesystem wie in den Ansprüchen sowie oben und nachfolgend beschrieben umfasst. Insbesondere kann ein solches Kontaktladesystem in der Anlage verwendet werden. Bevorzugt handelt es sich bei der Anlage um ein Hochregallager.

Bevorzugt kann an dem einen oder mehreren oder allen elektrischen Verbrauchern jeweils mindestens ein Stromabnehmer wie in den Ansprüchen sowie oben und nachfolgend beschrieben angeordnet sein. Auch können bevorzugt an dem Rahmenteil eine oder mehrere Kontaktstationen wie in den Ansprüchen sowie oben und nachfolgend beschrieben angeordnet sein.

In einer weiteren Fortbildung der Anlage können bevorzugt an dem Rahmenteil eine oder mehrere Stromabnehmer wie in den Ansprüchen sowie oben und nachfolgend beschrieben angeordnet sein. Dabei kann bevorzugt an dem einen oder mehreren oder allen elektrischen Verbraucher jeweils mindestens eine Kontaktstation wie in den Ansprüchen sowie oben und nachfolgend beschrieben angeordnet sein.

Weitere Besonderheiten und Vorteile der Erfindung ergeben sich aus der folgenden Beschreibung eines bevorzugten Ausführungsbeispiels anhand der Zeichnungen. Diese zeigen:
- **Fig. 1**: eine dreidimensionale Schrägansicht auf ein Kontaktladesystem mit einer Kontaktstation und einem Stromabnehmer mit Kontaktelementen;
- **Fig. 2**: eine Seitenansicht auf das Kontaktladesystem aus Fig. 1 von in Fig. 1 rechts;
- **Fig. 3**: eine Draufsicht auf die Kontaktstation aus Fig. 2;
- **Fig. 4**: eine dreidimensionale Schrägansicht des Stromabnehmers aus Fig. 1;
- **Fig. 5**: eine dreidimensionale Schrägansicht des Stromabnehmers aus Fig. 4 aus einer anderen Perspektive;
- **Fig. 6**: eine Draufsicht auf den Stromabnehmer aus Fig. 1 in der Position von Fig. 4;
- **Fig. 7**: eine Vorderansicht des Stromabnehmers aus Fig. 6;
- **Fig. 8**: eine Schnittansicht durch den Stromabnehmer aus Fig. 6 längs der Schnittlinie A-A;
- **Fig. 9**: eine dreidimensionale Schrägansicht auf eines der Kontaktelemente aus Fig. 4;
- **Fig. 10**: eine Draufsicht auf das Kontaktelement aus Fig. 9;
- **Fig. 11**: eine Vorderansicht des Kontaktelements aus Fig. 9;
- **Fig. 12**: eine Schnittansicht durch das Kontaktelement aus Fig. 10 längs der Linie B-B;
- **Fig. 13**: eine Seitenansicht auf das Kontaktelement aus Fig. 11 von in Fig. 11 links;
- **Fig. 14**: eine Schnittansicht durch das Kontaktelement aus Fig. 11 längs der Linie C-C in achtfacher Vergrößerung;
- **Fig. 15**: eine Explosionsdarstellung des Stromabnehmers aus Fig. 4;
- **Fig. 16**: eine Vorderansicht auf ein alternatives Kontaktelement entsprechend Fig. 9;
- **Fig. 17**: eine schematische dreidimensionale Unteransicht des Kontaktelements aus Fig. 16;
- **Fig. 18**: eine Schnittansicht durch einen Teil des Kontaktelements aus Fig. 16 entsprechend Fig. 12;
- **Fig. 19**: eine schematische dreidimensionale Schrägansicht eines Kontaktstiftelements des Kontaktelements aus Fig. 17.

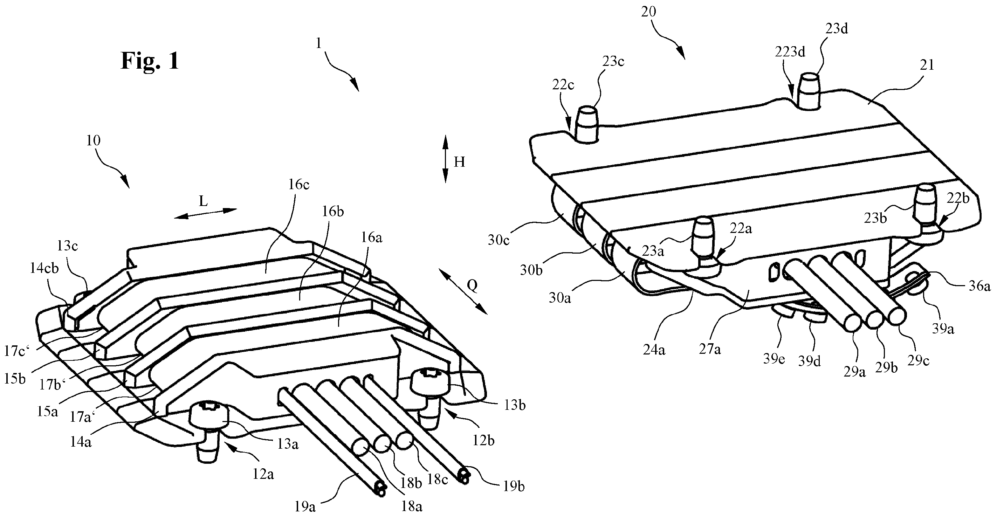

Fig. 1 zeigt eine dreidimensionale Schrägansicht eines erfindungsgemäßen Kontaktladesystems 1 mit einer Kontaktstation 10 und einem Stromabnehmer 20 zur Kontaktierung der Kontaktstation 10.

Das Kontaktladesystem 1 kann in unterschiedlichsten technischen Gebieten eingesetzt werden, wobei eine bevorzugte Verwendung im Bereich der automatisierten Hochregallager liegt. Dort können beispielsweise einzelne oder alle Regalfächer eines Hochregals jeweils mit einer oder ggf. auch mehreren Kontaktstationen 10 versehen werden. An in die Regalfächer in eine Einfahrrichtung bzw. Längsrichtung L ein- und ausfahrbare Regalbehälter als elektrische Verbraucher können dann jeweils ein oder ggf. auch mehrere Stromabnehmer 20 vorgesehen. Dabei müssen die Kontaktstation 10 und der Stromabnehmer 20 so zueinander ausgerichtet sein, dass sie beim in das Regalfach eingefahrenem Regalbehälter elektrisch miteinander kontaktieren, um dann elektrische Energie kontaktierend von der Kontaktstation 10 über den Stromabnehmer 20 zum elektrischen Verbraucher am Regalbehälter zu übertragen.

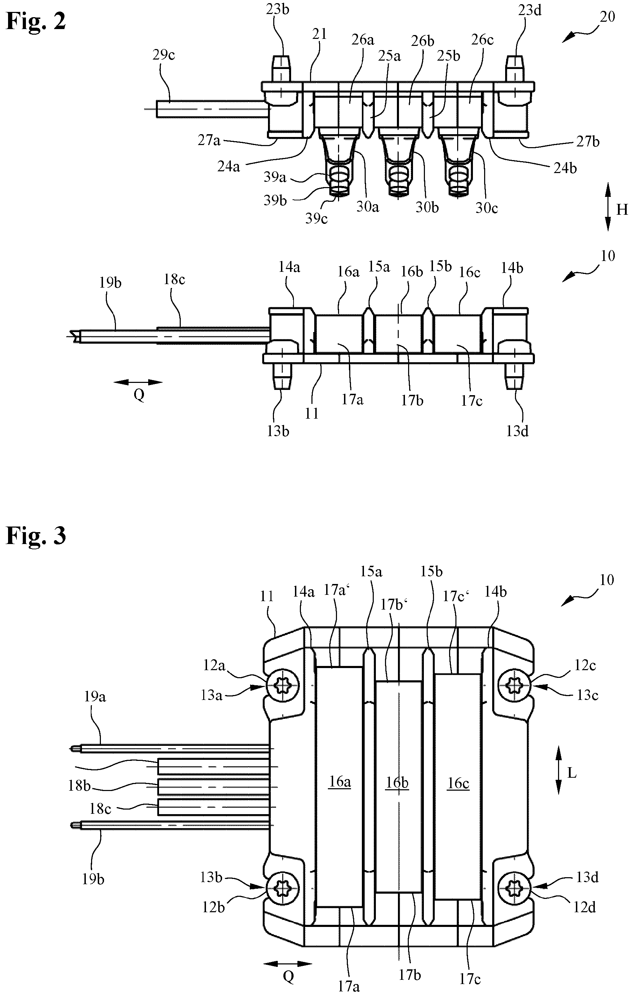

Die Kontaktstation 10, die in Fig. 2 in Seitenansicht, also von in Fig. 1 rechts und in Fig. 3 in Draufsicht gezeigt ist, weist einer Befestigungsplatte 11 auf, welche bevorzugt aus einem nicht elektrisch leitenden Material wie Kunststoff, Plastik etc. hergestellt sein kann. Dabei kann die Befestigungsplatte 11 ein oder auch mehrteilig ausgebildet sein und aus einzelnen, miteinander verbindbaren Teilen bestehen. Im vorliegenden Ausführungsbeispiel besteht die Befestigungsplatte 11 aus in Längsrichtung verlaufenden Teilen, wobei die Trennlinien zwischen den Teilen in Fig. 2 und 3 gut erkennbar sind. Dies dient der einfacheren Herstellung und besseren Variabilität, die Befestigungsplatte 11 kann aber auch aus weniger oder mehr Teilen oder auch einstückig gefertigt sein.

Um die Kontaktstation 10 auf einem dafür vorgesehenen, nicht gezeigten Träger, beispielsweise an einem Boden eines Regalfachs eines Hochregallagers befestigen zu können, sind in der Befestigungsplatte 11 seitlich vier Aussparungen 12a-d vorgesehen, durch welche die Befestigungsplatte 11 mittels vier Befestigungsschrauben 12a bis 12d auf dem Träger festgeschraubt werden kann. Bevorzugt sind, wie in der vorliegenden Ausgestaltung, die Aussparungen 12a-d seitlich geöffnet, so dass die Befestigungsschrauben 13a und 13b in den Träger vormontiert werden können, und anschließend die Befestigungsplatte 11 dann seitlich mit den Aussparungen 12a und 12b in die Befestigungsschrauben 13a, 13b geschoben werden kann. Anschließend braucht dann nur eine der Befestigungsschrauben 13c oder 13d durch die Aussparung 12c bzw. 12d in den Träger geschraubt werden, um die Befestigungsplatte 11 zur Endmontage vorzufixieren. Anschließend können dann, ohne dass die Gefahr eines Verschiebens der Befestigungsplatte 11 auf dem Träger besteht, die letzte Befestigungsschraube 13d in den Träger eingeschraubt und die restlichen Befestigungsschrauben 12a bis 12c dann festgezogen werden.

Auf den beiden in einer quer zur Längsrichtung L verlaufenden Querrichtung Q außen liegenden Seiten des Stromabnehmers 20 sind Seitenwangen 14a, 14b und zwischen diesen liegende mittlere Trennstege 15a, 15b angeordnet, welche sich in Längsrichtung L und in eine quer zur Querrichtung Q und quer zur Längsrichtung L erstreckenden Höhenrichtung H von der Befestigungsplatte 11 nach oben erstrecken.

Zwischen den Seitenwangen 14a, 14b und mittleren Trennstegen 15a, 15b sind jeweils Schleifkontakte 16a-c aus einem elektrisch leitenden Material vorgesehen, welche in Längsrichtung L an ihren Enden von der Befestigungsplatte 11 in Höhenrichtung H nach oben ansteigende Auffahrrampen 17a-c, 17a'-c' aufweisen. Die Seitenwangen 14a, 14b und Trennstege 15a, 15b sind bevorzugt aus einem nicht elektrisch leitenden Material, beispielsweise Kunststoff, Plastik oder ähnlichem gefertigt, um die elektrisch leitfähigen Schleifkontakte 16a-c sicher voneinander elektrisch zu isolieren.

Die Schleifkontakte 16a-c sind jeweils mit Kontaktleitungen 18a-18c, welche mit einer Energieversorgung des Kontaktladesystems 1 verbindbar oder verbunden sind, elektrisch verbunden, insbesondere angeschweißt oder angelötet.

Weiter sind Sensorleitungen 19a, 19b vorgesehen, welche beispielsweise mit Temperaturfühlern verbunden sind, welche die Temperatur des als Minuspol ausgebildeten Kontakts 16a und des als Pluspol ausgebildeten Kontakts 16c detektieren. Der Schleifkontakt 16b hingegen dient als Schaltkontakt, um das Laden zu starten.

Wie aus Fig. 3 erkennbar, sind die drei Schleifkontakte 16a-c unterschiedlich lang und stehen in Längsrichtung L unterschiedlich weit hervor. Dabei ist der erste Schleifkontakt 16a am längsten und steht gegenüber den beiden anderen Schleifkontakten 16b und 16c in Längsrichtung L hervor, sodass ein Kontaktelement 30a des Stromabnehmers 20 zuerst den Schleifkontakt 16a kontaktiert, bevor weitere Kontaktelemente 30b, 30c den Schleifkontakt 16b bzw. 16c kontaktieren.

Bevorzugt dient der mittlere Schleifkontakt 16b als kürzester Schleifkontakt als Enable- oder Trigger-Pol, wodurch sichergestellt werden kann, dass zunächst der Minuspol 16a und dann der Pluspol 16c mit dem entsprechenden Kontaktelement 30a bzw. 30c sicher elektrischen Kontakt hat, bevor der Ladevorgang begonnen wird. Hierdurch kann unter anderem vermieden werden, dass es aufgrund von die Schleifkontakte 16a, 16c noch nicht sauber kontaktierender Kontaktelemente 30a, 30c zum Funkenschlag kommt, was die Standdauer der die elektrische Energie übertragenden Kontaktelemente 30a, 30c und der entsprechenden Schleifkontakte 16a, 16c deutlich reduzieren würde.

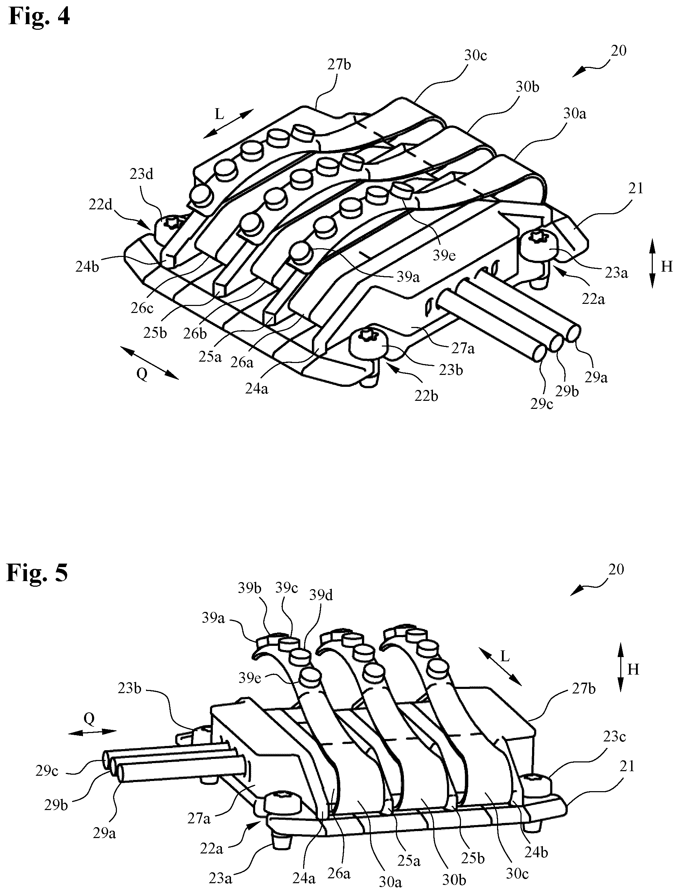

Der Stromabnehmer 20 ist neben den Darstellungen des Kompaktladesystems 1 in Fig. 1 und 2 besonders gut erkennbar in Fig. 4-8 und 15 dargestellt. Dabei ist der Stromabnehmer 20 in Fig. 1 und 2 in einer gegenüber der Kontaktstation 10 gezeigten Stellung dargestellt, während in Fig. 4 und den davon abgeleiteten weiteren Fig. 5 bis 8 der Stromabnehmer 20 auf den Kopf gestellt dargestellt ist, um die Erfindung einfacher erläutern zu können.

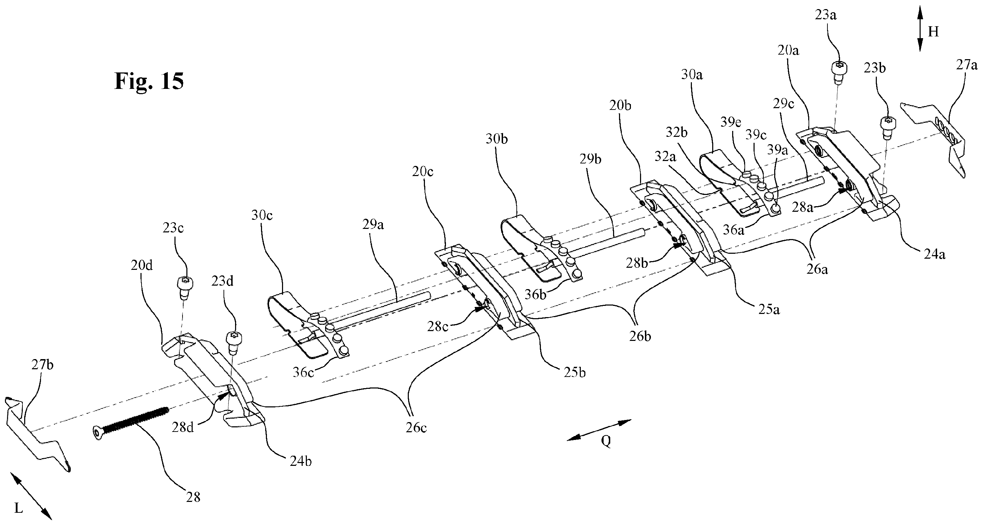

Dabei weist der Stromabnehmer 20 eine Tragplatte 21 auf, welche wie in Fig. 1 und 15 gut erkennbar aus mehreren in Längsrichtung L verlaufenden und nebeneinander angeordnete Bestandteilen besteht, beispielsweise den in Fig. 15 exemplarisch dargestellten Teilstücken 20a-d. Dabei weist die Tragplatte 21 seitlich jeweils Aussparungen 22a-d für Befestigungsschrauben 23a-d auf, mittels welcher der Stromabnehmer 20 an dem zu versorgenden elektrischen Verbraucher befestigt werden kann. Dies erfolgt wie bei der Kontaktstation 10 auch in entsprechender Weise mittels Befestigungsschrauben 23a-d, sodass hierzu auf die obigen Erläuterungen zur Befestigung der Befestigungsplatte 11 verwiesen wird.

Auch der Stromabnehmer 20 weist wieder in Längsrichtung L und Höhenrichtung H verlaufende Seitenwangen 24a, 24b sowie zwischen diesen liegenden mittlere Trennstege 25a, 25b auf, zwischen denen sich Befestigungsrampen 26a-c befinden. Die einzelnen in Längsrichtung L verlaufenden und nebeneinander angeordneten Teilstücke 20a-d der Tragplatte 21 sind in Fig. 15 gut erkennbar, wobei an den Innenseiten der Seitenwangen 24a, b und den mittleren Trennstegen 25a, b jeweils hälftig aufgeteilte Befestigungsrampen 26a-c vorgesehen sind. Auf den Außenseiten der Seitenwangen 24a, 24b sind Seitenwände 27a, 27b vorgesehen, wobei in der Seitenwand 27a Öffnungen für Kontaktleitungen 29a-c vorgesehen sind. Um die einzelnen Teilstücke 20a-d der Tragplatte 21 des Stromabnehmers 20 miteinander zu verbinden, können die Teilstücke 20a-d mittels einer durch fluchtende Durchgangsöffnungen 28d-b in den Teilstücken 20d-b gesteckten Verbindungsschraube 28 in an dem in Fig. 15 rechten Teilstück 20a der Befestigungsrampe 26a miteinander verschraubt werden, wobei letzteres hierzu bevorzugt ein Innengewinde 28a aufweist. Das Innengewinde 28a kann in das Material des Teilstücks 20a eingebracht, eingesetzt oder darin eingegossen sein, insbesondere wenn das Teilstück 20a aus Kunststoff besteht. Wenn zumindest das Teilstück 20a aus Kunststoff gefertigt ist, kann anstelle des Innengwindes 28a auch eine an den Durchmesser der Verbindungsschraube 28 derart angepasste Durchgangsöffnung vorgesehen sein, dass sich die Verbindungsschraube 28 in das Material des Teilstücks 20a eingraben kann, was die Fertigung und Montage vereinfacht. Bevorzugt können die Durchgangsöffnungen 28b-d größeren Innendurchmesser als die Verbindungsschraube 28 aufweisen, um diese einfach durchstecken und somit den Stromabnehmer 20 einfacher montieren zu können. Ggf. können die Durchgangsöffnung 28b-d aber auch geringfügig kleineren Durchmesser aufweisen als die Verbindungsschraube 28, so dass sich die Verbindungsschraube 28 jeweils in die Durchgangsöffnungen 28d-b eingräbt und dadurch jedes Teilstück 20b-d fest fixiert. Auch andere Verbindungsweisen sind denkbar, beispielsweise Rastverbindungen zwischen den einzelnen Teilstücken. Ebenso können die die Teilstücke 20a-d auch Positionierhilfen und zusätzlich zu der Verbindungsschraube 28 weitere Verbindungsmittel wie z.B. Schnapp- oder Rastverbindungen aufweisen.

Der Stromabnehmer 20 ist dabei bevorzugt aus den in Fig. 15 gut erkennbaren Teilstücken 20a-20d zusammengebaut, um die Montage und Befestigung von elektrisch leitenden Kontaktelementen 30a-c zu erleichtern, welche mit den Kontaktleitungen 29a-c jeweils elektrisch leitend verbunden sind. Dabei sind die Kontaktelemente 30a-c identisch ausgebildet, sodass die Erfindung im Weiteren vor allem anhand des Kontaktelements 30a erläutert wird. Entsprechende Ausführungen gelten für die Kontaktelemente 30b und 30c analog.

Auch die Kontaktstation 10 kann grundsätzlich wie der Stromabnehmer 20 aufgebaut sein, insbesondere wie in Fig. 15 dargestellt aus mehreren in Längsrichtung L verlaufenden und nebeneinander angeordneten Teilstücken.

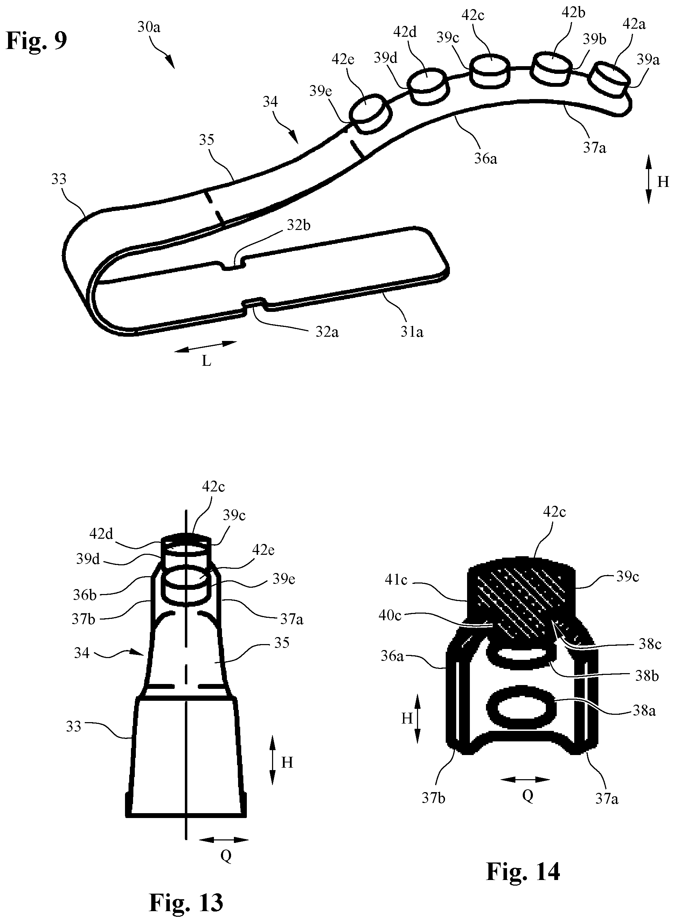

Wie insbesondere aus Fig. 9 bis 14 für das Kontaktelement 30a und der Explosionsdarstellung des Stromabnehmers 20 in Fig. 15 hervorgeht, ist das Kontaktelement 30a zwischen den beiden Teilstücken 20a, 20d der Tragplatte 21 angeordnet und umgreift die Befestigungsrampe 26a. Dabei sind an einem Befestigungsabschnitt 31a des Kontaktelements 30a einander in Querrichtung Q gegenüberliegende Positionierrücksprünge 32a, 32b vorgesehen, welche in entsprechende Positionierzapfen oder -vorsprünge (nicht sichtbar) an den Teilstücken 20a, 20b zu liegen kommen. In montierten Zustand der Tragplatte 21 fixieren diese Positionierzapfen oder -vorsprünge somit das Kontaktelement 30a in Längsrichtung L und am Stromabnehmer 20. Bevorzugt wird das Kontaktelement 30a so an der Tragplatte 21 befestigt, dass es dort zumindest in Höhenrichtung H schwimmend gelagert ist, bevorzugt auch bis zu einem gewissen Maß in Querrichtung Q und/oder Längsrichtung L. Hierzu sind die Positionierrücksprünge 32a, b in Längsrichtung L etwas größer ausgestaltet als die Fixiervorsprünge der Teilstücken 20a, 20b, um ein Spiel in Längsrichtung L zuzulassen. Entsprechend reichen die Fixiervorsprünge in Querrichtung Q nicht bis an den Grund der Positionierrücksprünge 32a, b, um auch eine Bewegung in Querrichtung Q zulassen zu können. Entsprechend sind auch die Kontaktelemente 30b und 30c zwischen den Teilstücken 20b und 20c bzw. Teilstücken 20c und 20d angeordnet.

Das Kontaktelement 30a weist dabei die besonders in Fig. 9, 10 und 13 erkennbare fischhakenähnliche Form auf, wobei sich an den zur Montage an der Tragplatte 21 vorgesehen Befestigungsabschnitt 31a ein stark gekrümmter Abschnitt 33 anschließt, in dem das Kontaktelement 30a um 180° nach hinten gekrümmt wird. An diesen stark gekrümmten Abschnitt 33 schließt sich dann ein S-förmig geformter Abschnitt 34 an, welcher sich zunächst in einem ersten Krümmungsabschnitt 35 in Höhenrichtung H von dem Befestigungsteil 40a nach oben, insbesondere konkav, weg krümmt, und sich dann anschließend in einem als zweiten Krümmungsabschnitt ausgebildeten Kontaktabschnitt 36a wieder in Höhenrichtung H zum Befestigungsabschnitt 31, insbesondere konvex, hin zu krümmen.

Dabei ist das Kontaktelement 30a im Befestigungsabschnitt 31a wie auch im stark gekrümmten Abschnitt 33 und im ersten Krümmungsabschnitt 35 flach bzw. bandförmig ausgebildet, während der als zweite Krümmungsabschnitt ausgebildete Kontaktabschnitt 36a trogförmig ausgebildet ist, wie beispielsweise in Fig. 14 gut erkennbar.

Dabei dient die trogförmige Ausgestaltung des Kontaktabschnitts 36a mit zum Befestigungsabschnitt 31a hin nach unten abgebogenen Seitenwandungen 37a, 37b zur Stabilisierung des Kontaktabschnitts 36a. Denn das Kontaktelement 30a soll für eine sehr große Anzahl von Kontaktierungen ausgelegt sein, bevorzugt mindestens 1 Million Kontaktierungszyklen, weiter bevorzugt mit mindestens 2 Millionen Kontaktierungszyklen. Als Kontaktierungszyklus wird dabei ein einmaliges Einfahren des Kontaktelements 30a an den Schleifkontakt 16a und das vollständige wieder Herausfahren vom Schleifkontakt 16a verstanden.

Das Kontaktelement 30a besteht bevorzugt aus einem elektrisch leitenden Material, welches bevorzugt gute federelastische Eigenschaften aufweist, um beim Einfahren und Kontaktieren über die Auffahrrampen 17a bzw. 17a' des Schleifkontakts 16a zum einen Nachgeben zu können und zum anderen dauerhaft in Höhenrichtung H an den Schleifkontakt 16a angedrückt und sicher elektrisch mit diesem kontaktiert zu werden. Vorteilhaft kann das Kontaktelement aus Federstahl hergestellt sein, es können aber auch andere geeignete Materialien wie z.B. Zinnbronze verwendet werden.

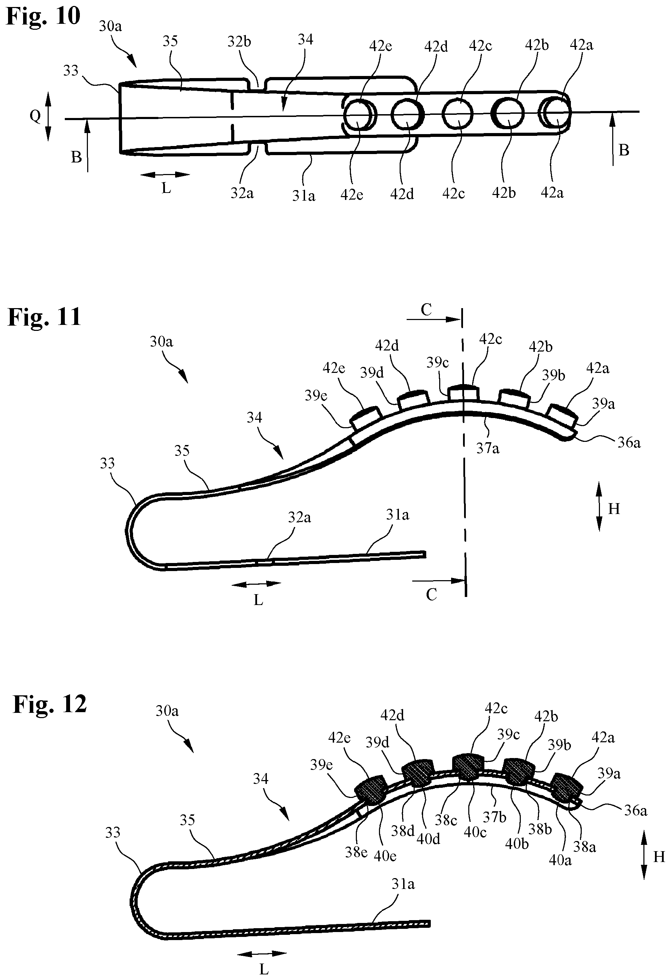

An dem trogförmigen Kontaktabschnitt 36a sind in Höhenrichtung H auf der dem Befestigungsabschnitt 31a abgewandten Seite eine Vielzahl von Stiftaufnahmen 38a-e vorgesehen, wie insbesondere Fig. 12 und 14 zeigen. Die Stiftaufnahmen 38a-e sind vorliegend als Bohrungen ausgebildet, können aber auch andere Form und Ausgestaltung aufweisen, beispielsweise vier-, sechs- oder mehreckig sein.

In jede der Stiftaufnahmen 38a-e ist jeweils ein als Kontaktstift 39a-e ausgebildeter elektrisch leitender Kontakt mit seinem Befestigungsteil 40a-e eingesteckt. An den Befestigungsteil 40a-e schließt sich ein pilzförmiger Kontaktteil 41a-e an, der also breiter ist als der Befestigungsteil 40a-e. Dabei weist der Kontaktteil 41a-e auf der in Höhenrichtung H vom Befestigungsabschnitt 31a abgewandten Seite eine hier kalottenförmige Kontaktfläche auf, welche hier als Kontaktkalotte 42a-d ausgebildet ist. Es können aber auch anderer Ausgestaltungen der Kontaktfläche verwendet werden, wobei die Ausgestaltung als Kalotte, also als kreisförmiger Kugelabschnitt eine gute Kontaktierung zu dem Schleifkontakt 16a ermöglicht, insbesondere eine weitgehend punktförmig ausgebildete Kontaktierung. Dies hat zur Folge, dass das Kontaktelement 30a jeweils sehr konzentriert nur einen kleinen Teil des Kontaktstifts 39c an den Schleifkontakt 16a drückt, wodurch eine gute Stromübertragung gewährleistet ist.

Bevorzugt liegt im Ladebetrieb die Kontaktfläche 42c des mittleren Kontaktstifts 39c an dem Schleifkontakt 16a an, insbesondere mit dem Scheitelpunkt der Kontaktfläche 42a. Weiter steht für den Fall einer kalottenförmigen Kontaktfläche 42c die gedachte Verbindungslinie zwischen Scheitelpunkt und dem Mittelpunkt der die kalottenförmige Kontaktfläche definierenden Kugel senkrecht auf dem Schleifkontakt 16a bzw. dessen Kontaktfläche.

Durch die kalottenförmige Ausbildung der Kontaktflächen 42a-e der Kontaktteile 41a-e kann zudem eine Schrägstellung oder Verkippen des Stromabnehmers 20 insbesondere in Höhenrichtung H gegenüber der Kontaktstation 10 ausgeglichen werden, wobei auch hier immer noch eine punktförmige Kontaktierung der Schleifkontakte 16a-c sichergestellt werden kann.

In der vorliegenden Ausführung folgen nicht näher bezeichnete Scheitelpunkte der Kontaktflächen 42a-e der Krümmung des Kontaktabschnitts 36a, wobei dieser hier bevorzugt als Kreisbogen ausgebildet ist, sodass die Scheitelpunkte der Kontaktflächen 42a-e ebenfalls auf einem Kreisbogen liegen. Ggf. kann die Krümmung des Kontaktabschnitts 36a aber auch einen anderen Verlauf aufweisen, z.B. einen elliptischen, parabolischen, hyperbolischen oder anders gekrümmten Verlauf aufweisen.

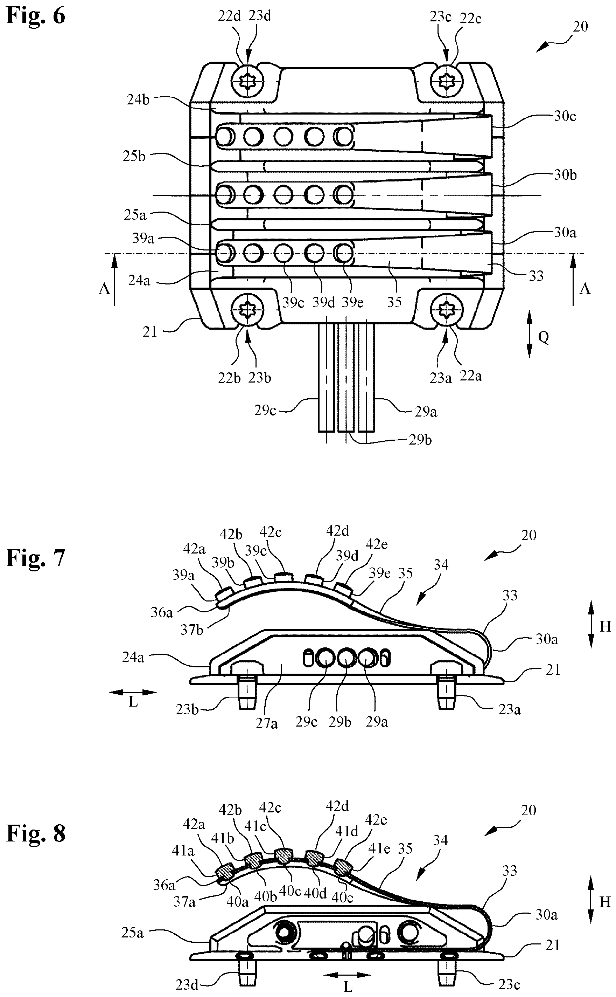

Um weiter ein sicheres Einführen der Kontaktelemente 30a-c in die Kontaktstation 10 an die Schleifkontakte 16a-c zu ermöglichen, selbst wenn der verfahrbare elektrische Verbraucher mit dem Stromabnehmer 20 ungenau gegenüber dem Träger und der Kontaktstation 10 positioniert ist, verjüngen sich die Kontaktelemente 30a-c vom stark gekrümmten Abschnitt 33 über den ersten Krümmungsabschnitt 35 zum Kontaktabschnitt 36a hin, wie insbesondere in Fig. 6, 10 und 13 gut erkennbar.

Bei der vorliegenden Ausgestaltung ist der Befestigungsteil 40a des Kontaktstifts, wie beispielsweise in Fig. 14 erkennbar, als Niet ausgebildet, welche in an sich bekannter Weise in der Stiftaufnahme 38a durch einen Nietvorgang befestigt ist, bei dem sich der Befestigungsteil 40a in bekannter Weise durch äußere Krafteinwirkung aufweitet und somit breiter wird als die Stiftaufnahme 38a, wodurch der Kontaktstift 39a fest und elektrisch leitend an dem Kontaktabschnitt 36a festgelegt ist. Anstelle der Befestigung durch Nieten können aber auch andere Befestigungsarten verwendet werden, beispielsweise kann der Befestigungsteil 40a ein Außengewinde und die Stiftaufnahme 38a ein Innengewinde aufweisen, sodass der Kontaktstift 39a ein- und ggf. auch wieder ausgeschraubt werden kann. Ebenfalls könnten die Kontaktstifte 39a-e auch elektrisch leitend an das Kontaktelement 30a angeklebt, angeschweißt oder angelötet werden.

Die anderen Befestigungsstifte 39b-e sind entsprechend in den zweiten Krümmungsabschnitt 36a eingebracht und dort befestigt. Entsprechendes gilt auch für die Kontaktelemente 30b, c, welche entsprechend ausgestaltet sind.

Fährt der Stromabnehmer 20 in die Kontaktstation 10 ein, wie unter anderem in Fig. 1 angedeutet, so kontaktieren die Kontaktelemente 30a-c die Schleifkontakte 16a-c jeweils in dem Bereich von deren Auffahrrampen 17a-c bzw. 17a'-c'. Bei Weiterbewegung des Stromabnehmers 20 in Längsrichtung L zur Kontaktstation 10 hierhin werden die S-förmigen gebogenen Abschnitte 34 des Kontaktelements 30a in Höhenrichtung zum Stromabnehmer 20 und dessen Tragplatte 21 gedrückt. Beim Einfahren wird also der Kontaktabschnitt 36a aus seiner in den Zeichnungen dargestellten, entspannten Ruhestellung in eine gespannte Kontaktstellung in Höhenrichtung H zum Befestigungsabschnitt 31a hin bewegt. In der Kontaktstellung wird der Kontaktabschnitt 36a durch die federelastischen Eigenschaften des Kontaktelements 30a dauerhaft gegen den Schleifkontakt 16a gedrückt, um den elektrischen Kontakt sicherzustellen. Dabei ist in Fig. 2 aus Gründen der besseren Erläuterung der Stromabnehmer 20 in Höhenrichtung H in deutlichen größerem Abstand zur Kontaktstation 10 gezeichnet, während der Stromabnehmer 20 in der Realität in Höhenrichtung H deutlich näher zur Kontaktstation 10 angeordnet ist, um einen sicheren Kontakt zu ermöglichen.

Da in dem trogförmigen Kontaktabschnitt die 36a identische ausgebildeten Kontaktstifte 39a-d der Krümmungslinie des Kontaktabschnitts 36a folgen, kontaktiert beim Einfahren des Kontaktelements 30a an den Schleifkontakt 16a zunächst der Kontaktstift 39a den Schleifkontakt 16a, und anschließend erfolgt dann die Kontaktierung mit dem Kontaktstift 39b und anschließend 39c. Abhängig vom Abstand zwischen Stromabnehmer 20 und Kontaktstation 10 in Höhenrichtung H kann auch ein anderer der Kontaktstifte 39a-e mit seiner Kontaktkalotte 42a-e den Schleifkontakt 16a kontaktieren.

Beim Ausfahren des Stromabnehmers 20 aus der Kontaktstation 10 in Längsrichtung L kontaktieren dann die Kontaktstifte 39a, b den Schleifkontakt 16a im Bereich der Auffahrrampen in umgekehrter Reihenfolge wie beim Einfahren, so dass bis zum vollständigen Entfernen des Stromabnehmers 20 von der Kontaktstation 10 eine Kontaktierung sichergestellt und ein evtl. Funkenschlag vermieden werden kann. Ggf. kann das Ausfahren auch in die andere Richtung erfolgen, der Stromabnehmer 10 fährt quasi durch die Kontaktstation 10 in Längsrichtung L "durch", so dass dann die Kontaktstifte 39d, e den Schleifkontakt 16a im Bereich der entgegengesetzten Auffahrrampe 17a' bis zum vollständigen Ausfahren sicher kontaktieren. Dies kann beispielsweise dann sein, wenn bei einem Hochregallager das Regalfach, in der die Kontaktstation 10 befestigt ist, von beiden Seiten des Regals in Längsrichtung L befüllt werden kann, der verfahrbare Regalbehälter also zu beiden Seiten ausfahren kann.

Ggf. können in einer alternativen Ausgestaltung die Kontaktelemente 30a auch an der Kontaktstation 10 angeordnet sein, und die Schleifkontakte 16a-c an dem Stromabnehmer 20. Gerade bei der vorliegend gezeigten Ausgestaltung können herstellungs- und montagetechnisch vorteilhaft die die Befestigungsplatte 11 und die Tragplatte 21 bildenden Einzelteile, wie insbesondere in Fig. 15 erkennbar, identisch ausgebildet sein, so dass die Schleifkontakte 16a-c einfach an den Befestigungsrampen 26a-c angeordnet werden können, während die Kontaktelemente 30a-c ebenso einfach an den die Auffahrrampen 17a-c, 17a'-c' aufweisenden Teilen der Befestigungsplatte 11 angeordnet werden können.

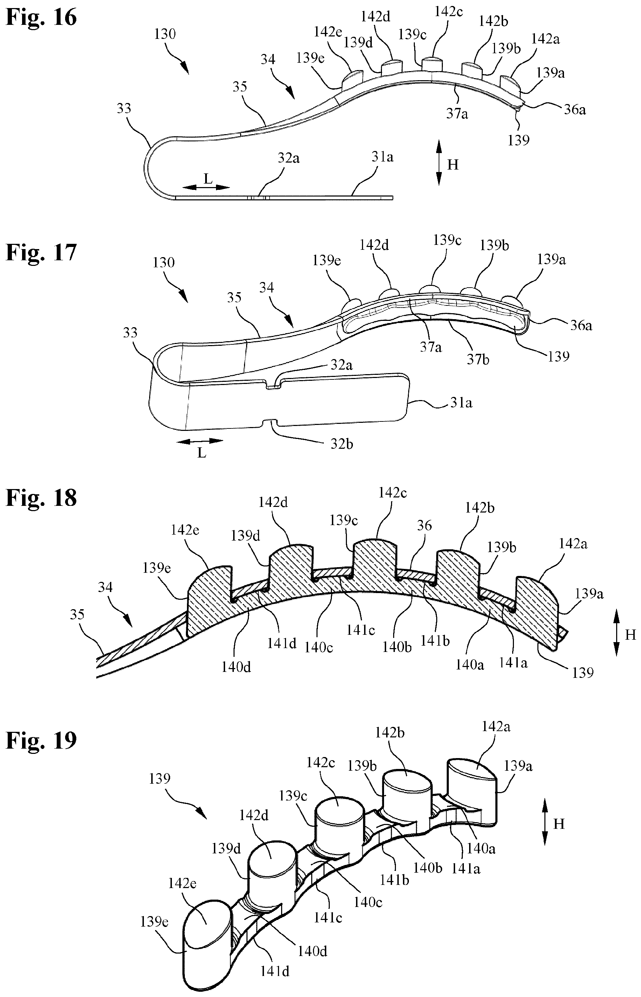

In Fig. 16 bis 19 ist eine alternative Ausgestaltung eine Kontaktelements 130 dargestellt, welches sich im wesentlichen durch die Ausgestaltung von Kontaktstiften 139a-139e von der in Fig. 1 bis 15 gezeigten Ausgestaltung der Kontaktstifte 39a-e des Kontaktelements 30 unterscheidet. Deshalb wird im nachfolgenden vor allem auf die Unterschiede eingegangen, während gleiche Bestandteile wieder gleiche Bezeichnungen und gleiche Bezugsziffern tragen.

Dabei weist das alternative Kontaktelement 130 wieder Kontaktstifte 139a-e auf, welche jedoch nicht einzeln in die Kontaktaufnahmen 38a-e eingesetzt sind, sondern fertigungstechnisch vorteilhaft durch zwischen benachbarten Kontaktstiften 139a-e liegende Verbindungsstege 140a-d zu einem Kontaktstiftelement 139 verbunden sind. Die Verbindungsstege 140a-d weisen dabei dem Kontaktabschnitt 36a zugewandte Stromübertragungsflächen 141a-d auf, welche zur Anlage an den Trogboden des trogförmigen Kontaktabschnitts 36a gelangen und dort bevorzugt flächig angeklebt, angelötet, angeschweißt oder anders elektrisch leitend verbunden sind, wie in Fig. 18 gut erkennbar. Hierdurch kann eine gute und flächige Stromübertragung vom Kontaktstiftelement 139 zum Kontaktabschnitt 36a sichergestellt werden.

Anders als in Fig. 12 und 14 erkennbar sind die Kontaktflächen 142a, b, d, e der Kontaktstifte 139a, b, d, e vorliegend nicht mittig zur Zentralachse der jeweiligen Kontaktkalotte ausgebildet, sondern außerzentrisch. Dabei vollziehen die Kontaktflächen 142a, b, d, e die konkave Krümmung des zweiten Krümmungsabschnitts 36a ungefähr nach, die vom mittigen Kontaktstift 139c abgewandten Kanten der Kontaktflächen 142a, b, d, e liegen in Höhenrichtung H gesehen also näher am Befestigungsabschnitt 31a als die dem Kontaktstift 139c zugewandten Kanten der Kontaktflächen 142a, b, d, e.

Dies dient u.a. dazu, dass die Kontaktstifte 139a, b, d, e sanfter an den Schleifkontakt 16a anfahren können, da die Kontaktflächen 142a, b, d, e den Schleifkontakt 16a bereits im Bereich ihrer abgerundeten Oberfläche anfahren, und nicht mit der Kante am Übergang zum zylindrischen Teil der Kontaktteile 141a, b, d, e. Diese Ausgestaltung kann auch bei den der Kontaktflächen 42a-e des oben beschriebenen Kontaktelements 30 vorgesehen werden Zusätzlich kann hierdurch auch die Fertigung des Kontaktelements 130 vereinfacht werden, denn hier können Kontaktaufnahmen 138a-e, durch welche die Kontaktstifte 139a-e durchgesteckt werden, insbesondere wenn jene als Bohrungen ausgebildet sind, alle in dieselbe Einsteckrichtung für das Kontaktelement 130 verlaufen. Bevorzugt verläuft die Einsteckrichtung parallel zur Höhenrichtung H. Die Scheitelpunkte der bevorzugt kalottenförmigen Kontaktoberflächen 142a-e folgen dann jedoch wie bei der oben beschriebenen ersten Ausführungsform des Kontaktelements 30 wieder der Krümmung des Kontaktabschnitts 36a und liegen insbesondere auf einem Kreisbogen.

Das alternative Kontaktelement 130 kann also einfach und somit schnell hergestellt werden und weist eine gute und großflächige Stromübertragung auf.

### Bezugszeichen

- 1: Kontaktladesystem
- 10: Kontaktstation, Ladestation
- 11: Befestigungsplatte
- 12a-d: Aussparungen für Befestigungsschrauben
- 13a-d: Befestigungsschrauben
- 14a, b: Seitenwangen
- 15a, b: mittlere Trennstege
- 16a-c: Schleifkontakte (Minuspol 16a, Schaltpol 16b, Pluspol 16c)
- 17a-c, 17a'-c': Auffahrrampen
- 18a-c: Kontaktleitungen
- 19a, b: Sensorleitungen
- 20: Stromabnehmer
- 20a-d: Teilstücke des Stromabnehmers
- 21: Tragplatte
- 22a-d: Aussparungen für Befestigungsschrauben
- 23a-d: Befestigungsschrauben
- 24a, b: Seitenwangen
- 25a, b: mittlere Trennstege
- 26a-c: Befestigungsrampen
- 27a,b: Seitenblenden
- 28: Verbindungsschraube
- 28a: Innengewinde im Teilstück 20a für Verbindungsschraube 28
- 28b-d: Durchgangsöffnungen durch Teilstücke 20b-d
- 29a-c: Kontaktleitungen
- 30a-c: Kontaktelemente
- 31a-c: Befestigungsabschnitt
- 32a, b: Positionierrücksprünge
- 33: stark gekrümmter Abschnitt, Rückstellelement
- 34: S-förmig gebogener Abschnitt
- 35: erster Krümmungsabschnitt
- 36a-c: trogförmiger zweiter Krümmungsabschnitt, Kontaktabschnitt
- 37a, b: Seitenwandungen Kontaktabschnitt
- 38a-e: Kontaktaufnahmen, Stiftaufnahmen, -bohrungen
- 39a-e: Kontakte, Kontaktstifte
- 40a-e: Befestigungsteile
- 41a-e: Kontaktteile
- 42a-e: Kontaktkalotten, kalottenförmige Kontaktfläche

- 130: alternatives Kontaktelement
- 138a-e: Kontaktaufnahmen, Stiftaufnahmen, -bohrungen
- 139: Kontaktstiftelement
- 139a-e: Kontakte, Kontaktstifte
- 140a-d: Verbindungsstege
- 141a-d: Stromübertragungsflächen Verbindungsstege
- 142a-e: Kontaktkalotten, kalottenförmige Kontaktfläche

- L: Einfahrrichtung, Längsrichtung Schleifkontakte
- Q: Querrichtung
- H: Höhenrichtung

## Patentansprüche

1. Kontaktelement (30a-c; 130) zur Kontaktierung eines Schleifkontakts (16a-c), mit einem Befestigungsabschnitt (31a-c) und einem mit diesem verbundenen, sich in eine Längsrichtung (L) erstreckenden Kontaktabschnitt (36a-c), wobei der Schleifkontakt (16a-c) und das Kontaktelement (30a-c; 130) insbesondere in der Längsrichtung (L) zueinander beweglich sind, **dadurch gekennzeichnet, dass** der Kontaktabschnitt (36a-c) mindestens einen elektrisch leitenden Kontakt (39a-e; 139a-e) mit einer Kontaktfläche (42a-e; 142a-e) zur elektrisch leitenden Kontaktierung des Schleifkontakts (16a-c) aufweist.

2. Kontaktelement (30a-c; 130) nach Anspruch 1, **dadurch gekennzeichnet, dass** der Kontaktabschnitt (36a-c) elektrisch leitend und/oder konvex gekrümmt ist ist.

3. Kontaktelement (30a-c; 130) nach Anspruch 1 oder 2, **dadurch gekennzeichnet, dass** der Kontaktabschnitt (36a-c) zumindest teilweise von der Kontaktfläche (42a-e) wegweisende trogförmige Seitenwandungen (37a, 37b) aufweist, insbesondere wobei die trogförmigen Seitenwandungen (37a, 37b) im wesentlichen in Längsrichtung (L) verlaufen.

4. Kontaktelement (30a-c; 130) nach einem der voranstehenden Ansprüche, **dadurch gekennzeichnet, dass** der Kontaktabschnitt (36a-c) ein freies Ende aufweist, insbesondere wobei sich der Kontaktabschnitt (36a-c) zu dem freien Ende hin verjüngt.

5. Kontaktelement (30a-c; 130) nach einem der voranstehenden Ansprüche, **dadurch gekennzeichnet, dass** der Befestigungsabschnitt (31a-c) in die Längsrichtung (L) verläuft, und/oder dass der Befestigungsabschnitt (31a-c) in einer quer zur Längsrichtung (L) verlaufenden Querrichtung (Q) verlaufende Positionierrücksprünge (32a, 32b) und/oder Positioniervorsprünge aufweist.

6. Kontaktelement (30a-c; 130) nach einem der voranstehenden Ansprüche, **dadurch gekennzeichnet, dass** sich an den Befestigungsabschnitt (31a-c) in Längsrichtung ein stark, bevorzugt um mindestens 150°, besonders bevorzugt um mindestens 170° gekrümmter Abschnitt (33) anschließt.

7. Kontaktelement (30a-c; 130) nach einem der voranstehenden Ansprüche, **dadurch gekennzeichnet, dass** der Kontaktabschnitt (36a-c) gegenüber dem Befestigungsabschnitt (31a-c) in einer Ruhestellung gelagert ist und bei Auslenkung des Kontaktabschnitts (36a-c) aus der Ruhestellung ein Rückstellelement eine, insbesondere federelastische, Rückstellkraft in Richtung der Ruhestellung auf den Kontaktabschnitt (36a-c) ausübt.

8. Kontaktelement (30a-c; 130) nach einem der voranstehenden Ansprüche, **dadurch gekennzeichnet, dass** sich in Längsrichtung (L) an den Kontaktabschnitt (36a-c) ein erster, bevorzugt sich zum Kontaktabschnitt (36a-c) hin verjüngender, Krümmungsabschnitt (35) anschließt.

9. Kontaktelement (30a-c; 130) nach Anspruch 8, **dadurch gekennzeichnet, dass** der erste Krümmungsabschnitt (35) gegenüber dem Kontaktabschnitt (36a-c) in Höhenrichtung (H) gegenläufig gekrümmt ist.

10. Kontaktelement (30a-c; 130) nach Anspruch 7 und einem der Ansprüche 8 bis 9, **dadurch gekennzeichnet, dass** sich der erste Krümmungsabschnitt (35) in Längsrichtung (L) an den stark gekrümmten Abschnitt (33) anschließt.

11. Kontaktelement (30a-c; 130) nach einem der voranstehenden Ansprüche, **dadurch gekennzeichnet, dass** die Kontaktfläche (42a-e; 142a-e) des Kontakts (39a-e; 139a-e) kalottenförmig ausgebildet ist, insbesondere in Form einer Kugelkalotte.

12. Kontaktelement (30a-c) nach einem der voranstehenden Ansprüche, **dadurch gekennzeichnet, dass** der Kontakt (39a-e) einen die Kontaktfläche (42a-e) aufweisenden, insbesondere pilzförmigen Kontaktteil (41a-e) aufweist.

13. Kontaktelement (30a-c) nach einem der voranstehenden Ansprüche, **dadurch gekennzeichnet, dass** der Kontakt (39a-e) einen Befestigungsteil (40a-e) zum Befestigen in einer entsprechend geformten Kontaktaufnahme (38a-e) des Kontaktabschnitts (36a-c) aufweist.

14. Kontaktelement (30a-c; 130) nach einem der voranstehenden Ansprüche, **dadurch gekennzeichnet, dass** am Kontaktabschnitt (36a-c) mehrere in Längsrichtung (L) zueinander versetzte, insbesondere als Kontaktstifte ausgebildete, Kontakte (39a-e; 139a-e) befestigt sind.

15. Kontaktelement (30a-c; 130) nach Anspruch 14, **dadurch gekennzeichnet, dass** die Kontakte (39a-e; 139a-e) dem Verlauf des Kontaktabschnitts (36a-c) folgen und/oder in Höhenrichtung (H) zueinander jeweils in einem Winkel zueinander angeordnet sind, und/oder dass Scheitelpunkte der Kontaktflächen (42a-e; 142a-e) der Krümmung des Kontaktabschnitts (36a-c) folgen und/oder auf einem Kreisbogen liegen.

16. Kontaktelement (130) nach einem der Ansprüche 14 bis 15, **dadurch gekennzeichnet, dass** mehrere oder alle der zueinander versetzten Kontakte (139a-e) miteinander elektrisch und/oder mechanisch zu einem Kontaktstiftelement (139) verbunden sind, wobei bevorzugt
a) das Kontaktstiftelement (139) an die Krümmung des Kontaktabschnitts (36a-c) angepasst ist,
b) die Kontakte (139a-e) über Verbindungsstege (140a-d) miteinander verbunden sind, wobei die Verbindungsstege (140a-d) bevorzugt zum Kontaktabschnitt (36a-c) hin weisende Stromübertragungsflächen (141a-d) zur, bevorzugt flächigen, Anlage an den Kontaktabschnitt (36a-c) aufweisen, und/oder
c) das Kontaktstiftelement (139) mit den Kontakten (139a-e) materialeinstückig ausgebildet ist.

17. Stromabnehmer (20) zur konduktiven Übertragung elektrischer Energie und/oder Daten zu oder von einer Kontaktstation (10), **dadurch gekennzeichnet, dass** er mindestens ein Kontaktelement (30a-c; 130) nach einem der voranstehenden Ansprüche aufweist.

18. Stromabnehmer (20) nach Anspruch 17, **dadurch gekennzeichnet, dass**
a) die Kontaktelemente (30a-c; 130) quer zur Längsrichtung (L), insbesondere parallel, nebeneinander angeordnet sind,
b) die Kontaktelemente (30a-c; 130) schwimmend am Stromabnehmer (20) gelagert sind, insbesondere schwimmend in der Längsrichtung (L) und/oder der Höhenrichtung (H) und/oder einer quer zur Längsrichtung (L) und/oder quer zur Höhenrichtung (H) verlaufenden Querrichtung (Q), und/oder
c) die Kontaktelemente (30a-c; 130) an einer Tragplatte (21) des Stromabnehmers (20) angeordnet sind, wobei zwischen den Kontaktelementen (30a-c; 130), insbesondere elektrische isolierende, Trennstege (25a, 25b) vorgesehen sind, wobei die Tragplatte (21) bevorzugt aus in Längsrichtung (L) verlaufenden, in Querrichtung (Q) miteinander verbindbaren Einzelteilen (20a-d) zusammengesetzt ist.

19. Kontaktstation (10) zur konduktiven Übertragung elektrischer Energie und/oder Daten zu oder von einem Stromabnehmer (20) nach einem der Ansprüche 17 bis 18, **dadurch gekennzeichnet, dass** die Kontaktstation (10) einen oder mehrere Schleifkontakte (16a-c) zu Kontaktierung eines oder mehrere Kontaktelemente (30a-c; 130) des Stromabnehmers (20) aufweist.

20. Kontaktstation (10) nach Anspruch 19, **dadurch gekennzeichnet, dass**
a) der oder die Schleifkontakte (16a-c) in Längsrichtung (L) einander gegenüberliegende, in Höhenrichtung (H) rampenförmig verlaufende Enden (17a-c, 17a'-c') aufweisen, und/oder
b) dass die Schleifkontakte (16a-c) quer zur Längsrichtung (L), insbesondere parallel, nebeneinander angeordnet sind, wobei bevorzugt mindestens 2, bevorzugt mindestens 3 der nebeneinander angeordneten Schleifkontakte (16a-c) in Längsrichtung (L) unterschiedlich lang sind, insbesondere wobei die Enden eines längeren Schleifkontakts (16a) in Längsrichtung (L) beidseits über die Enden eines kürzeren Schleifkontakts (16b, 16c) hinausragen.

21. Kontaktladesystem (1) zur Übertragung elektrischer Energie und/oder Daten zwischen mindestens einer Kontaktstation (10) und mindestens einem Stromabnehmer (20), **dadurch gekennzeichnet, dass** der oder die Stromabnehmer (20) nach einem der Ansprüche 17 bis 18 und die Kontaktstation (10) oder Kontaktstationen nach einem der Ansprüche 19 bis 20 ausgebildet sind.

22. Anlage mit mindestens einem gegenüber einem Rahmenteil der Anlage verfahrbaren elektrischen Verbraucher, **dadurch gekennzeichnet, dass** die Anlage mindestens ein Kontaktladesystem (1) nach Anspruch 21 aufweist, wobei an dem einen oder mehreren oder allen elektrischen Verbrauchern jeweils mindestens ein Stromabnehmer (20) nach einem der Ansprüche 17 bis 18 angeordnet ist, und/oder dass an dem Rahmenteil eine oder mehrere Kontaktstationen (10) nach einem der Ansprüche 19 bis 20 angeordnet sind, oder dass an dem Rahmenteil ein oder mehrere Stromabnehmer (20) nach einem der Ansprüche 17 bis 18 angeordnet sind, und/oder dass an dem einen oder mehreren oder allen elektrischen Verbraucher jeweils mindestens eine Kontaktstation (10) nach einem der Ansprüche 19 bis 20 angeordnet ist.
